# EUROPÄISCHE PATENTANMELDUNG

(11) **EP 1 333 555 A2**
(43) Veröffentlichungstag der Anmeldung: **06.08.2003**
(21) Anmeldenummer: 02027108.6
(22) Anmeldetag: 04.12.2002
(51) Int. Cl.: H02J 9/00

(54) **Verfahren und Schaltungsanordnung zur Vermeidung der Standby-Entladung einer batterieversorgten Signal-Auswerteschaltung für einen Sensor**

(30) Priorität: 01.02.2002 DE 10204070
(71) Anmelder: Miele & Cie. KG, 33332 Gütersloh (DE)
(72) Erfinder: Bertram, Andre, 33739 Bielefeld (DE); Ennen, Günther, Dr., 32130 Enger (DE); Tiekötter, Stefan, 33699 Bielefeld (DE)

(57) **Zusammenfassung**

Die Erfindung betrifft ein Verfahren zur Vermeidung der Standby-Entladung einer batterieversorgten Signal-Auswerteschaltung (5) für die Ladungssignale (L) eines Sensors (1), insbesondere des Staubsensors eines Staubsaugers. Ferner betrifft die Erfindung eine Schaltungsanordnung zur Durchführung des Verfahrens. Erfindungsgemäß ist vorgesehen, dass die Ladungssignale (L), nur wenn diese auftreten, ein Anschalten der Stromversorgung der Signal-Auswerteschaltung (5) veranlassen. Das Ausbleiben der Ladungssignale (L) bewirkt ein Abschalten der Stromversorgung. Diese erfinderische "Netzschalterfunktion" für die Signal-Auswerteschaltung (5) ermöglicht eine lange Batterielebensdauer im Standby-Betrieb. Vorteilhaft kann dabei auf jegliche elektromechanische Schalter, insbesondere auf verschleißanfällige Unterdruckschalter verzichtet werden.

## Beschreibung

Die Erfindung betrifft ein Verfahren zur Vermeidung der Standby-Entladung einer batterieversorgten Signal-Auswerteschaltung für die Ladungssignale eines Sensors, insbesondere des Staubsensors eines Staubsaugers. Ferner betrifft die Erfindung eine Schaltungsanordnung zur Durchführung des Verfahrens.

Aus der EP 0 759 157 A1 ist ein Verfahren zum Nachweis von Staubpartikeln unter Verwendung einer Signal-Auswerteschaltung für den Staubsensor eines Staubsaugers bekannt, bei dem Schaltung und Sensor von einer Batterie energieseitig versorgt werden. Die Signal-Auswerteschaltung, welche die Ladungssignale des in der Bodendüse des Staubsaugers angeordneten piezokeramischen Staubsensors empfängt, besteht im wesentlichen aus einem Signalverstärker mit nachgeschalteten Signalfiltern, Schwellwertdetektoren und anderen elektronischen Bauelementen, welche im Ruhebetrieb des Staubsaugers ständig mit der Batteriespannung beaufschlagt sind. Die bekannte Schaltungsanordnung entnimmt der Batterie somit in den Saugpausen (Standby-Betrieb) einen erheblichen Ruhestrom (in der Größenordnung von ca. 10 mA), der im Verlauf der Zeit zu einer schnellen Entladung der Batterie führt.

Ferner ist es bei einer Sensoreinrichtung für einen Staubsauger bekannt, die Ruhestromentladung mit Hilfe eines mechanischen Unterdruckschalters zu verhindern. Immer dann, wenn der Staubsauger arbeitet, wird der Unterdruckschalter betätigt und legt die Sensoreinheit an die Betriebsspannung. Diese Lösung ist insofern nachteilig, da hier der Unterdruckschalter in der Funktion als Ein/Ausschalter für die Stromversorgung einem zunehmenden mechanischen Verschleiß unterliegt und zudem noch einen eigenen Bauraum außerhalb der Elektronik benötigt. Der Erfindung liegt die Aufgabe zugrunde, hier Abhilfe zu schaffen.

Erfindungsgemäß werden die vorgenannten Probleme mit dem im Patentanspruch 1 angegebenen Verfahrensschritt gelöst. Vorteilhafte Weiterbildungen der Erfindung ergeben sich aus den nachfolgenden Unteransprüchen. Eine entsprechende elektronische Schaltungsanordnung zur Durchführung des Verfahrens ist durch den Patentanspruch 5 gekennzeichnet. Die sich diesem Patentbegehren anschließenden Unteransprüche ergeben vorteilhafte Ausgestaltungen der Schaltungsanordnung.

Dadurch, dass Ladungssignale, wenn diese auftreten, ein Anschalten der Stromversorgung der Signal-Auswerteschaltung und ein Ausbleiben der Ladungssignale ein Abschalten der Stromversorgung veranlasst, kann auf jegliche elektromechanische Schalter, insbesondere auf verschleißanfällige Unterdruckschalter verzichtet werden. Hierdurch ist es vorteilhaft möglich, eine preiswerte Elektronik raumsparend und ggf. nicht ortsgebunden zu realisieren, welche aufgrund ihrer erfindungsgemäßen "Netzschalterfunktion" für die Signal-Auswerteschaltung eine lange Batterielebensdauer im Standby-Betrieb ermöglicht.

Ein Ausführungsbeispiel der Erfindung ist in den Zeichnungen rein schematisch dargestellt und wird nachfolgend näher beschrieben. Es zeigt
- Figur 1: eine Anordnung eines piezoelektrischen Staubsensors im Strömungsweg einer Bodendüse eines Staubsaugers, wobei dem Staubsensor eine Signal-Auswerteschaltung mit zugeordnetem Stromversorgungs-Schaltkreis nachgeschaltet ist,
- Figur 2: den Stromversorgungs-Schaltkreis mit dem Staubsensor im Detail sowie die nachgeschaltete Signal-Auswerteschaltung im vereinfachten Blockschaltbild.
- Figur 3: die elektrische Schaltung nach Fig. 2 in vereinfachter Darstellung mit einem zusätzlichen Entkopplungs-Schalter.

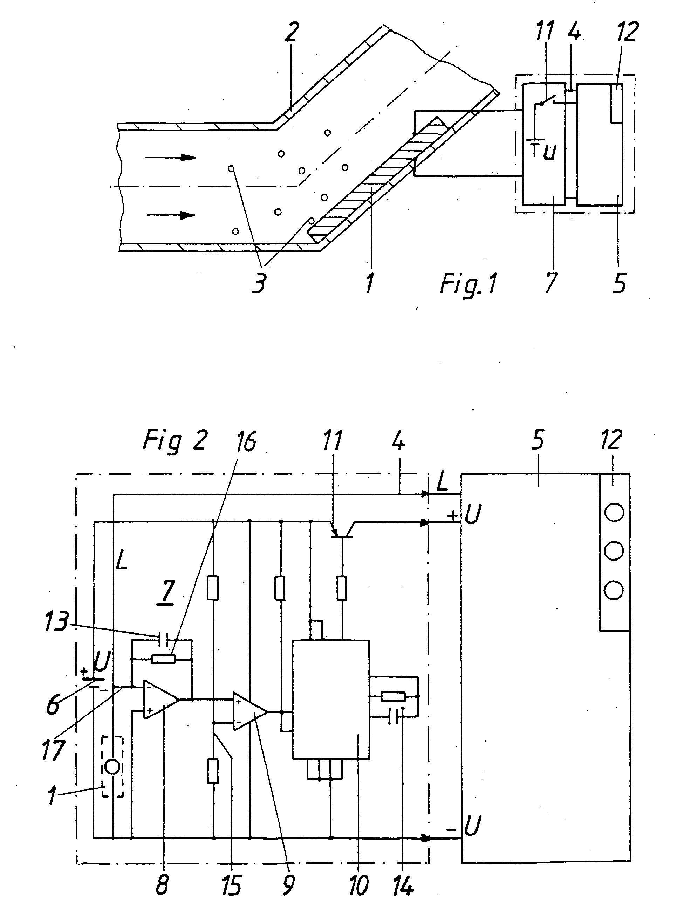

Die Fig. 1 zeigt einen piezoelektrischen Staubsensor (1), der in einem Strömungsweg, insbesondere im abgewinkelten Anschlußstutzen (2) der Bodendüse eines nicht dargestellten Staubsaugers angeordnet ist. Der von der Bodendüse im Saugbetrieb aufgenommene Staub wird durch die Saugleistung des Staubsaugers in einer durch einen Pfeil bestimmten Strömungsrichtung durch den Anschlußstutzen (2) bewegt. Die durch die Bodendüse bewegten Staubpartikel (3) treffen im Bereich der Rohrkrümmung des Anschlußstutzens (2) auf den dort angebrachten piezoelektrischen Staubsensor (1). Die Bewegungsenergie bzw. die Impulsänderung der Staubpartikel (3) wandelt der Sensor in ein entsprechendes elektrisches Signal um. Dieses sog. Ladungssignal (L) wird über einen Leitungszweig (4) einer Signal-Auswerteschaltung (5) zugeführt, deren Betriebsspannung (Batteriespannung U einer Batterie 6) über einen vorgeschalteten Stromversorgungs-Schaltkreis (7) angelegt wird. Der Stromversorgungs-Schaltkreis (7) mit dem Staubsensor (1) ist ständig mit der Batterie verbunden, sh. auch Fig. 2.

Die Fig. 2 zeigt im einfachen Blockschaltbild die Signal-Auswerteschaltung (5), welche nach Ausbildung und Funktion einer in der EP 0 759 157 A1 gezeigten Mess-Schaltung entspricht. Auch die bekannte Schaltung ist batteriegespeist. Der in Fig. 2 jedoch im Detail gezeigte Stromversorgungs-Schaltkreis (7) mit dem Staubsensor (1) für die Signal-Auswerteschaltung (5) ist in Funktion eines Netzschalters ausgebildet und schaltet die Signal-Auswerteschaltung (5) bei einer Staubpartikelsensierung an die Batteriespannung (U) und in den spannungslosen Standby-Betrieb, wenn keine Staubpartikel (3) sensiert werden.

Erfindungsgemäß wird eine Standby-Entladung der batterieversorgten Signal-Auswerteschaltung (5) also dadurch vermieden, dass auftretende Ladungssignale (L) des Sensors (1) zum Anschalten der Stromversorgung der Signal-Auswerteschaltung (5) herangezogen werden, und dass ein Ausbleiben der Ladungssignale (L) ein Abschalten der Stromversorgung veranlasst. Dabei ist das An- und Abschalten der Stromversorgung von den Amplitudenwerten der Ladungssignale (L) des Staubsensors (1) abhängig gesteuert, wozu Schwellwerte oder Empfindlichkeitseinstellungen der nachfolgenden Verstärker einstellbar sind. Das An- und Abschalten der Batteriespannung (U) an die Signal-Auswerteschaltung (5) ist vom zeitlichen Verlauf bzw. Auftreten der aufeinanderfolgenden Ladungssignale (L) des piezoelektrischen Staubsensors (1) abhängig. Diese Ladungs- oder Triggersignale (L) werden sowohl der Signal-Auswerteschaltung (5), als auch separat über eine Zuleitung (17) dem in Fig. 2 gezeigten Stromversorgungs-Schaltkreis (7) zugeführt.

Nach der Schaltungsanordnung gemäß Fig. 2 ist der Staubsensor (1) in dem ständig an Batteriespannung (U) gelegten Stromversorgungs-Schaltkreis (7) angeordnet, wobei der Stromversorgungs-Schaltkreis (7) einen Ladungssignalverstärker (8) mit einem nachgeschalteten Komparator (9) zur Aufbereitung der über den Leitungszweig (4) bzw. die Zuleitung (17) vom Staubsensor (1) kommenden Ladungssignale (L) beinhaltet. Die aufbereiteten Ladungssignale (L) werden einer monostabilen Kippschaltung (10) zugeführt, deren Ausgang einen die Batteriespannung (U) an die Signal-Auswerteschaltung (5) anlegenden Transistor (11) ein- und ausschaltet. Die über den Leitungszweig (4) kommenden Ladungssignale (L) werden ebenfalls der Signal-Auswerteschaltung (5) zugeführt, welche letztlich über eine zugeordnete Anzeige (12) den Bediener beim Staubsaugen über das Saugergebnis informiert. Die Bedieneranzeige (12) kann akustisch oder optisch über den jeweiligen Staubpartikelgrad informieren.

Der Ladungssignalverstärker (8) erfasst je nach Empfindlichkeit - einstellbar durch eine Querkapazität (13) und einen Querwiderstand (16) - das Betriebsgeräusch des Staubsaugers und auftreffende Staubpartikel (3). Der Komparator (9) formt das verrauschte Ausgangssignal des Ladungssignalverstärkers (8) in Rechtecksignalblöcke um, worauf diese die monostabile Kippschaltung (10) triggern. Die monostabile Kippschaltung (10) schaltet für die über ihre Widerstands/Kondensator-Kombination (14) festgelegte Zeit (z. B. ca. 1 Sekunde) den Transistor (11) ein, worauf die Batteriespannung (U) an die Signal-Auswerteschaltung (5) durchgeschaltet wird. Solange der Staubsensor (1) Signale liefert, wird die Kippschaltung (10) immer wieder getriggert, so dass die Betriebszeit permanent neu beginnt. Treffen keine Signale mehr ein, so wird die Spannung zur Signal-Auswerteschaltung (5) vorzugsweise innerhalb von ca. 1 Sekunde unterbrochen. Die Rückstellzeit der monostabilen Kippschaltung (10) des Stromversorgungs-Schaltkreises (7) kann durch eine Änderung der Widerstands/Kondensatorwerte von (14) variiert werden. Über einen an der Batteriespannung (U) liegenden Spannungsteiler (15) ist die Empfindlichkeit (Schaltschwelle) der verstärkten Ladungssignale (L) (oder Triggersignale) einstellbar.

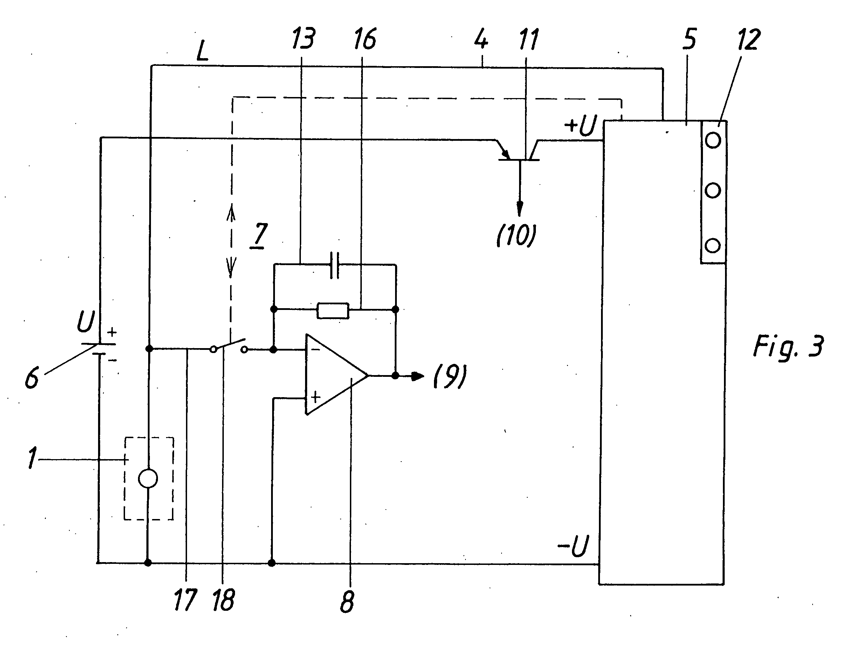

Gemäß einer vorteilhaften Weiterbildung der Erfindung kann gemäß Fig. 3 in die zum Ladungssignalverstärker (8) führende und vom Leitungszweig (4) abzweigende Zuleitung (17) auch ein Entkopplungs-Schalter (18) gelegt werden, der von der Elektronik des Staubsaugers betätigt wird. Dieser Schalter (18) könnte ein Transistor oder ein Relaiskontakt sein. Im Standby-Betrieb ist der Schalter (18) geschlossen. Werden Staubsignale empfangen, wird über den Komparator (9) das Monoflop und damit die Anzeige (12) erstmalig für ca. 1 bis 2 Sekunden eingeschaltet. In der "Einphase" der monostabilen Kippschaltung (10) öffnet der Schalter (18) und die Sensorsignale (L) werden vom Ladungsverstärker (8) abgekoppelt. Nach Ablauf der "Einphase" schaltet das Monoflop (10) die batterieversorgte Signal-Auswerteschaltung (5) wieder aus. Der Schalter (18) schließt wieder und die Triggerung beginnt erneut. Durch diese Variante ergeben sich vorteilhafte Merkmale in der Entkopplung von Ladungsverstärker und Elektronik. Auch besteht die Möglichkeit, den Schalter in den Leitungszweig (4) zu legen oder beide Leitungen (4, 17) mit Schaltern (18) zu versehen.

Eine im Versuch mit der erfindungsgemäßen Schaltungsanordnung ermittelte Ruhestromaufnahme ergab bei 6 Volt Batteriespannung einen Stromwert von ca. 70 Mikroampere. Dabei wurde der Ladungssignalverstärker des Stromversorgungs-Schaltkreises vorteilhaft als Mehrfachoperationsverstärker (z. B. Zweifachverstärker) ausgebildet. Bei Verwendung von vier 1,5 V Mignonzellen mit einer Kapazität von ca. 2 Ah und einer effektiven Saugzeit mit dem Staubsauger von 50 Std./Jahr, wobei eine Stromaufnahme von durchschnittlich 30 mA je nach Anzahl der Anzeigelampen der eingeschalteten Anzeigeeinrichtung der Signal-Auswerteschaltung angenommen wird, ergibt sich eine Batterielebensdauer von etwa 1,5 Jahren. Die geringe Stromaufnahme des Stromversorgungs-Schaltkreises (7) von etwa 70 Mikroampere ergibt sich durch die Verwendung von Low- oder Micropower-Halbleitern in der Schaltung.

Die Erfindung ermöglicht die Realisierung einer preiswerten Elektronik, welche raumsparend und auch ggf. ortsunabhängig in einem Staubsauger oder dessen Bodendüse, z. B. auch im Handgriff, zu installieren ist. Aufgrund der erfindungsgemäßen "Netzschalterfunktion" des Stromversorgungs-Schaltkreises (7) für die Signal-Auswerteschaltung (5) ist eine lange Batterielebensdauer im Standby-Betrieb möglich. Statt eines piezoelektrischen Staubsensors (1) könnte bei angepasster Schaltung auch ein photoelektrischer oder optoelektronischer Staubsensor verwendet werden. Darüber hinaus lässt sich die Erfindung selbstverständlich auch auf andere batteriebetriebene elektronische Schaltungen mit Sensoren anwenden, mit denen Signale erzeugt werden, die zum Triggern verwendet werden können.

## Patentansprüche

1. Verfahren zur Vermeidung der Standby-Entladung einer batterieversorgten Signal-Auswerteschaltung für die Ladungssignale eines Sensors, insbesondere des Staubsensors eines Staubsaugers,
**dadurch gekennzeichnet,**
**dass** auftretende Ladungssignale (L) des Sensors (1) zum Anschalten der Stromversorgung der Signal-Auswerteschaltung (5) herangezogen werden, und dass ein Ausbleiben der Ladungssignale (L) ein Abschalten der Stromversorgung veranlasst.

2. Verfahren nach Anspruch 1,
**dadurch gekennzeichnet,**
**dass** das An- und Abschalten der Batteriespannung (U) von den Amplitudenwerten der Ladungssignale (L) des Staubsensors (1) abhängig gesteuert ist.

3. Verfahren nach Anspruch 1 oder 2,
**dadurch gekennzeichnet,**
**dass** die Ladungssignale (L) in ihrer Empfindlichkeit einstellbar sind.

4. Verfahren nach einem oder mehreren der Ansprüche 1 bis 3,
**dadurch gekennzeichnet,**
**dass** das An- und Abschalten der Batteriespannung (U) vom zeitlichen Verlauf aufeinanderfolgender Ladungssignale (L) abhängig gesteuert ist.

5. Schaltungsanordnung zur Durchführung des Verfahrens nach Anspruch 1, wobei der Staubsensor in einem ständig an die Versorgungsspannung einer Batterie gelegten Stromversorgungs-Schaltkreis angeordnet ist,
**dadurch gekennzeichnet,**
**dass** der Stromversorgungs-Schaltkreis (7) mit dem Staubsensor (1) in Funktion eines Netzschalters (Transistor 11) für die Signal-Auswerteschaltung (5) ausgebildet ist.

6. Schaltungsanordnung nach Anspruch 5,
**dadurch gekennzeichnet,**
**dass** der von der Batterie (6) ständig gespeiste Stromversorgungs-Schaltkreis (7) einen Ladungssignalverstärker (8) mit einem nachgeschalteten Komparator (9) zur Aufbereitung der Ladungssignale (L) vom Staubsensor (1) beinhaltet, wobei die aufbereiteten Ladungssignale (L) einer monostabilen Kippschaltung (10) zugeführt sind, deren Ausgang einen die Batteriespannung (U) an die Signal-Auswerteschaltung (5) anlegenden Transistor (11) ein- und ausschaltet.

7. Schaltungsanordnung nach Anspruch 5 und 6,
**dadurch gekennzeichnet,**
**dass** die Ladungssignale (L) des Staubsensors (1) im Stromversorgungs-Schaltkreis (7) durch einen Spannungsteiler (15) und/oder durch eine Widerstands/Kondensator-Kombination (Querkapazität 13, Querwiderstand 16) in ihrer Empfindlichkeit einstellbar sind.

8. Schaltungsanordnung nach einem der Ansprüche 5 bis 7,
**dadurch gekennzeichnet,**
**dass** die Rückstellzeit der monostabilen Kippschaltung (10) des Stromversorgungs-Schaltkreises (7) variierbar ist.

9. Schaltungsanordnung nach einem der Ansprüche 5 bis 8,
**dadurch gekennzeichnet,**
**dass** in einer Zuleitung (17) zum Ladungsverstärker (8) und/oder im Leitungszweig (4) ein Schalter (18) zur Entkopplung des Ladungssignalverstärkers (8) und/oder der Signal-Auswerteschaltung (5) angeordnet ist.

10. Schaltungsanordnung nach einem der Ansprüche 5 bis 9,
**dadurch gekennzeichnet,**
**dass** der Ladungssignalverstärker (8) des Stromversorgungs-Schaltkreis (7) vorzugsweise als Mehrfachoperationsverstärker ausgebildet ist.
